# EUROPÄISCHE PATENTSCHRIFT

(11) **EP 1 457 529 B1**
(45) Veröffentlichungstag und Bekanntmachung des Hinweises auf die Patenterteilung: **20.06.2007**
(21) Anmeldenummer: 04005200.3
(22) Anmeldetag: 04.03.2004
(51) Int. Cl.: C09D 5/00, C09D 7/00

(54) **Beschichtungsmittel mit Farbumschlag**
Coating having colour indicator
Revêtement avec indicateur de couleur

(30) Priorität: 08.03.2003 DE 10310509; 09.03.2003 DE 10310511; 18.04.2003 DE 10318143
(43) Veröffentlichungstag der Anmeldung: 15.09.2004
(73) Patentinhaber: Brillux GmbH & Co. KG, 48163 Münster (DE)
(72) Erfinder: Stach, Dirk, Dr., 45768 Marl (DE); Leusmann, Jan, 48301 Nottuln (DE)
(74) Vertreter: Cohausz & Florack

(56) Entgegenhaltungen:
- EP-A- 0 629 452
- US-A- 3 266 920
- US-A- 3 287 156

## Beschreibung

Die Erfindung betrifft ein Beschichtungsmittel, insbesondere ein Beschichtungsmittel auf Dispersionsbasis wie beispielsweise eine wässrige Dispersionsfarbe.

Wässrige Dispersionsfarben sind allgemein bekannt und werden beispielsweise zum Anstreichen von Decken und Wänden in Innenräumen eingesetzt.

Beim Überstreichen von Wänden und Decken mit einer Farbe, deren Farbton dem Farbton der zu überstreichenden Fläche entspricht, besteht häufig die Schwierigkeit, dass während des Streichens nicht genau erkennbar ist, auf welche Stellen bereits Farbe aufgetragen wurde und auf welche nicht. Besonders ausgeprägt ist dieses Problem beim Überstreichen von weißen Decken mit einer weißen Dispersionsfarbe. Dies führt dazu, dass einige Stellen unbeabsichtigt häufiger übergestrichen werden, als andere. Ein solcher ungleichmäßiger Farbauftrag kann nach dem Trocknen der Farbe zu einer unerwünschten Streifenbildung an Decken und Wänden führen und macht ein zeit- und kostenaufwendiges erneutes Überstreichen der Flächen erforderlich.

Aus der DE 196 21 966 A1 ist die Verwendung von natürlichen Farbstoffen wie Carotinoiden oder Xanthophyllen zur vorübergehenden Markierung oder Einfärbung von Materialien bekannt, z. B. zur Herstellung von medizinischen Desinfektionslösungen zum Auftragen auf die Haut vor Operationen. Die in dieser Druckschrift beschriebenen Farbstoffe sind gegenüber äußeren Einflüssen wie Temperatur, UV-Licht, Tageslicht oder Oxidationsmitteln wie Luftsauerstoff empfindlich und zersetzen sich unter diesen Bedingungen innerhalb einiger Stunden unter vollständiger Verblassung.

Aus der EP 0 629 452 A1 ist ein Verfahren zum Reduzieren der Trocknungszeit eines Beschichtungsmittels bekannt, bei dem diesem Beschichtungsmittel eine Verbindung mit transienter Farbigkeit, wie beispielsweise ein pHsensitiver Farbstoff und eine flüchtige Base zugegeben wird. Nach Aufbringen auf ein Substrat wird das zunächst farbige Beschichtungsmittel trocknen gelassen, wobei die Einfärbung die Trocknungsrate erhöht. Im Laufe des Trocknungsvorgangs entweicht die Base und es tritt eine Entfärbung ein.

Die US 3 287 156 und 3 266 920 offenbaren jeweils leckindizierende Beschichtungsmittel für Flugkörper und Raketen. Die Beschichtungsmittel enthalten jeweils einen Oxidations-Reduktions-Indikator und einen Säure-Base-Indikator, die auf die Oberfläche des betreffenden Objekts aufgebracht werden. Mit Hilfe dieser beiden Indikatoren können der Austritt von sowohl redoxaktiven Substanzen als auch von Säuren und Basen angezeigt werden.

Der Erfindung liegt die Aufgabe zugrunde, ein Beschichtungsmittel bereitzustellen, welches sich auf leichte Art und Weise gleichmäßig auf Oberflächen auftragen lässt. Insbesondere soll beim Streichen leicht erkennbar sein, auf welche Stellen bereits Beschichtungsmittel aufgetragen wurde und auf welche nicht. Das Beschichtungsmittel soll ferner ausgezeichnete Anstricheigenschaften, insbesondere bezüglich seines Nassabriebs und Kontrastverhältnisses, aufweisen.

Diese Aufgabe wird erfindungsgemäß mit einem Beschichtungsmittel gemäß Anspruch 1 gelöst. Vorteilhafte Ausführungsformen der Erfindung sind in den Unteransprüchen beschrieben.

Das erfindungsgemäße Beschichtungsmittel enthält einen Säure-Base-Indikator. Der Säure-Base-Indikator weist oberhalb eines bestimmten pH-Bereiches (Umschlagsbereich) eine andere Farbe auf, als unterhalb dieses Bereiches. Vorzugsweise ist der Säure-Base-Indikator unterhalb des Umschlagsbereiches farblos. Ein erfindungsgemäß besonders geeigneter Säure-Base-Indikator ist Phenolphthalein, welches oberhalb seines Umschlagsbereiches (pH 8-10) rot und unterhalb des Umschlagsbereiches farblos ist.

Der pH-Wert des Beschichtungsmittels wird vorzugsweise oberhalb des Umschlagsbereiches des Indikators eingestellt. Gemäß einer bevorzugten Ausführungsform der Erfindung wird der pH des Beschichtungsmittels auf einen Wert > 9, noch bevorzugter > 10 und am bevorzugtesten > 11 eingestellt. Wird als Beschichtungsmittel beispielsweise eine weiße Dispersionsfarbe eingesetzt, der als Säure-Base-Indikator Phenolphthalein zugesetzt und deren pH auf 11 eingestellt ist, so weist diese Farbe wegen der intensiven roten Farbgebung von Phenolphthalein einen rosa Farbton auf. Vorzugsweise wird das den Säure-Base-Indikator enthaltende Beschichtungsmittel - wie für Dispersionsfarben üblich - unter Luftausschluss aufbewahrt.

Beim Auftragen auf die zu beschichtende Oberfläche wird das Beschichtungsmittel der Luftatmosphäre ausgesetzt. Dabei wird der pH des Beschichtungsmittels durch Reaktion mit Kohlendioxid (CO₂) aus der Luft gesenkt. Sinkt der pH des Beschichtungsmittels durch Aufnahme von Kohlendioxid unter den Umschlagsbereich des Säure-Base-Indikators, so ändert sich die Farbe des Beschichtungsmittels. Wird als Beschichtungsmittel beispielsweise die zuvor beschriebene weiße Dispersionsfarbe mit einem pH von 11 und Phenolphthalein als Indikator eingesetzt, so fällt der pH des Beschichtungsmittels innerhalb einiger Minuten nach dem Auftragen durch Aufnahme von Kohlendioxid aus der Luft auf < 8, was zu einem Farbumschlag des Indikators von rot nach farblos führt. Das beim Auftragen rosa eingefärbte Beschichtungsmittel ändert somit innerhalb weniger Minuten nach dem Auftragen unter Luftatmosphäre seine Farbe in reinweiß. Auf diese Weise ist für den Heimwerker leicht erkennbar, welche Stellen bereits gestrichen wurden und welche nicht. Ein ungleichmäßiges Auftragen der Farbe wird somit vermieden.

Überraschend an dem erfindungsgemäßen Beschichtungsmittel ist insbesondere, dass der Zusatz von Säure-Base-Indikatoren keinerlei negativen Einfluss auf die Anstricheigenschaften des Beschichtungsmittels hat. So weisen die erfindungsgemäßen Beschichtungsmittel insbesondere hinsichtlich Nassabrieb und Kontrastverhältnis ausgezeichnete Eigenschaften nach DIN EN 13300 auf.

Das erfindungsgemäße Beschichtungsmittel enthält einen Säure-Base-Indikator. Der Umschlagsbereich des Säure-Base-Indikators liegt vorzugsweise zwischen pH 6 und pH 14 und insbesondere zwischen pH 8 und pH 10.

Gemäß einer weiteren bevorzugten Ausführungsform der Erfindung erfolgt der Farbumschlag des Säure-Base-Indikators von farbig bei höherem pH nach farblos bei niedrigerem pH.

Derartige Säure-Base-Indikatoren sind beispielsweise Phenolphthalein, Nitramin, o-Kresolphthalein, α-Naphtholbenzein und Thymolphthalein. Ein erfindungsgemäß besonders geeigneter Säure-Base-Indikator ist Phenolphthalein.

Der Säure-Base-Indikator kann dem Beschichtungsmittel in beliebigen Mengen zugesetzt werden. Vorzugsweise wird der Säure-Base-Indikator dem Beschichtungsmittel in einer Menge zugesetzt, die gerade ausreicht, um dem Beschichtungsmittel eine genügende Färbung zu verleihen. Gemäß einer besonders bevorzugten Ausführungsform wird der Säure-Base-Indikator dem Beschichtungsmittel in einer Menge von 0,001 bis 1 Gew.%, insbesondere 0,01 bis 0,1 Gew.%, bezogen auf die Gesamtmenge des Beschichtungsmittels, zugesetzt.

Das Beschichtungsmittel weist einen pH > 8, insbesondere einen pH > 11, auf. Die Einstellung des pH erfolgt durch Zusatz von Kaliwasserglas, Natronwasserglas oder Hydroxiden wie Natrium-, Kalium- und Ammoniumhydroxid. Besonders geeignet als basische Substanz ist Wasserglas, insbesondere Kaliwasserglas. Besonders geeignet ist ferner Kaliumhydroxid bzw. Kalilauge.

Gemäß einer bevorzugten Ausführungsform der Erfindung werden die oben genannten basischen Substanzen, insbesondere Kaliwasserglas, dem Beschichtungsmittel in einer Menge von 0,01 bis 10 Gew.%, insbesondere 2 bis 4 Gew.%, bezogen auf die Gesamtmenge des Beschichtungsmittels, zugesetzt. Im Fall von 50%iger Kalilauge und/oder 10%iger Natronlauge wird die basische Substanz dem Beschichtungsmittel vorzugsweise in einer Menge von 0,01 bis 5 Gew.%, insbesondere 0,1 bis 1 Gew.%, bezogen auf die Gesamtmenge des Beschichtungsmittels, zugesetzt.

Um zu verhindern, dass sich der pH des Beschichtungsmittels während der Lagerung (Topfzeit) verändert und infolge der pH-Änderung ein unerwünschter Farbumschlag des Säure-Base-Indikators eintritt, ist es vorteilhaft, den pH des Beschichtungsmittels durch Einsatz von geeigneten Puffern zu puffern.

Die vorliegende Erfindung ist nicht auf bestimmte Beschichtungsmittel beschränkt und kann Anwendung bei beliebigen wässrigen und lösungsmittelhaltigen Systemen finden wie beispielsweise wässrigen Dispersionsfarben, Wasserlacken, lösungsmittelhaltige Lacken und Kunstharzputzen.

Als Beschichtungsmittel kommt insbesondere eine wässrige Dispersionsfarbe, insbesondere eine weiße wässrige Dispersionsfarbe, in Betracht. Derartige Beschichtungsmittel sind dem Fachmann grundsätzlich bekannt und beispielsweise in H. Kittel "Lehrbuch der Lacke und Beschichtungen", Band 3, S. Hirzel Verlag, 2001, Seiten 155 bis 160 ausführlich beschrieben.

Gemäß einer bevorzugten Ausführungsform der Erfindung enthält das Beschichtungsmittel mindestens ein Pigment, insbesondere ein Weißpigment, z. B. TiO₂. Vorzugsweise ist das Pigment im Beschichtungsmittel in einer Menge von 2 bis 15 Gew.%, insbesondere 5 bis 10 Gew.%, bezogen auf die Gesamtmenge des Beschichtungsmittels, enthalten.

Gemäß einer weiteren bevorzugten Ausführungsform der Erfindung enthält das Beschichtungsmittel mindestens ein Bindemittel. Geeignete Bindemittel sind beispielsweise Kunstharzdispersionen, insbesondere Kunstharzdispersionen auf Basis von Vinylacetat-Homopolymerdispersionen, Vinylacetat-Copolymerdispersion (z. B. Vinylacetat-Ethylen; Vinylacetat-Ethylen-Vinylchlorid-Dispersion; Vinylacetat-Maleinsäureester-Dispersionen; Vinylacetat-Acrylat-Dispersionen), Styrol-Acrylat-Dispersionen und Reinacrylat-Dispersionen. Besonders bevorzugt ist eine Kunstharz-Dispersion auf Basis von Styrol-Acrylat. Vorzugsweise ist das Bindemittel im Beschichtungsmittel in einer Menge von 5 bis 40 Gew.%, insbesondere 15 bis 18 Gew.%, bezogen auf die Gesamtmenge des Beschichtungsmittels, enthalten.

Gemäß einer weiteren bevorzugten Ausführungsform der Erfindung enthält das Beschichtungsmittel Füllstoffe. Geeignete Füllstoffe sind beispielsweise Carbonate (z. B. gefälltes und/oder natürliches Calciumcarbonat), Silikate (z. B. Talkum, Quarz und/oder Glimmer), Sulfate (z. B. Bariumsulfat und/oder Calciumsulfat), Sulfide (z. B. Zinksulfid), Hydroxide (z. B. Aluminiumhydroxid) und/oder Oxide (z. B. Zinkoxid und/oder Aluminiumoxid). Diese sind im Beschichtungsmittel vorzugsweise in einer Menge von 30 bis 70 Gew.%, insbesondere 40 bis 45 Gew.%, bezogen auf die Gesamtmenge des Beschichtungsmittels, enthalten.

Gemäß einer weiteren bevorzugten Ausführungsform der Erfindung enthält das Beschichtungsmittel Additive wie Verdicker bzw. Rheologiemodifizierungsmittel (z. B. Cellulosen, Polyurethanverdicker, Acrylatverdicker, Stärke und/oder Polysaccharide), Entschäumer (z. B. Mineralölentschäumer, Siliconentschäumer), Netz- und Dispergiermittel (z. B. Polyacrylate und/oder Polyphosphate), Stabilisatoren, Filmbildehilfsmittel (z. B. Weichmacher auf Basis von Phthalaten, Estern und/oder Glykolen), Konservierungsmittel (z. B. Isothiazolinon-Derivate, Bronopol, IPBC, Formaldehyd und/oder Formaldehyddepotstoffe) und/oder Biozide.

Die Additive sind im Beschichtungsmittel vorzugsweise in einer Menge von insgesamt 0,1 bis 5 Gew.%, insbesondere 0,5 bis 2 Gew.%, bezogen auf die Gesamtmenge des Beschichtungsmittels, enthalten.

Das erfindungsgemäße Beschichtungsmittel weist vorzugsweise einen Feststoffanteil von 40 bis 80 Gew.%, insbesondere 55 bis 65 Gew.%, bezogen auf die Gesamtmenge des Beschichtungsmittels, auf.

Gemäß einer bevorzugten Ausführungsform der Erfindung wird als Beschichtungsmittel eine Dispersionsfarbe eingesetzt. Besonders geeignet ist eine Dispersionsfarbe, die folgende der vorstehend beschriebenen Inhaltsstoffe enthält: (a) Bindemittel, (b) Pigmente, (c) Wasser und (d) Füllstoffe.

Daneben kann die Dispersionsfarbe weitere Inhaltsstoffe wie Netz- und Dispergiermittel, Entschäumer, Filmbildehilfsmittel, Rheologiemodifizierungsmittel und Konservierungsmittel enthalten.

Nachfolgend wird die Erfindung anhand eines Ausführungsbeispiels näher beschrieben:

### Beispiel 1

Es wurde eine wässrige Dispersionsfarbe mit folgender Rezeptur hergestellt:

| **Anteil (Gew.%)** | **Inhaltsstoff** |
|---|---|
| 12,00 | Bindemittel auf Basis Styrol-Acrylat |
| 7,00 | Titandioxid |
| 20,00 | natürliches Calciumcarbonat |
| 16,00 | gefälltes Calciumcarbonat |
| 4,00 | Glimmer |
| 6,00 | Talkum |
| 3,50 | Additive und Stabilisatoren |
| 2,50 | Kaliwasserglas (Festkörpergehalt ca. 28 %) |
| 0,02 | Phenolphthalein |
| 0,07 | Natronlauge 10 % |
| Rest | Wasser |

### Beispiel 2

Es wurde eine wässrige Dispersionsfarbe mit folgender Rezeptur hergestellt:

| **Anteil (Gew.%)** | **Inhaltsstoff** |
|---|---|
| 14,00 | Bindemittel auf Basis Styrol-Acrylat |
| 7,00 | Titandioxid |
| 20,00 | natürliches Calciumcarbonat |
| 16,00 | gefälltes Calciumcarbonat |
| 4,00 | Glimmer |
| 6,00 | Talkum |
| 4,00 | Additive und Stabilisatoren |
| 0,30 | Kalilauge 50 % |
| 0,02 | Phenolphthalein |
| Rest | Wasser |

### Beispiel 3

Es wurde eine wässrige Dispersionsfarbe mit folgender Rezeptur hergestellt:

| **Anteil (Gew.%)** | **Inhaltsstoff** |
|---|---|
| 16,00 | Bindemittel auf Basis Styrol-Acrylat |
| 6, 50 | Titandioxid |
| 23,00 | natürliches Calciumcarbonat |
| 15,00 | gefälltes Calciumcarbonat |
| 6,50 | Talkum |
| 3,50 | Additive und Stabilisatoren |
| 2,50 | Kaliwasserglas (Festkörpergehalt ca. 28 %) |
| 0,02 | Phenolphthalein |
| 0,07 | Natronlauge 10 % |
| Rest | Wasser |

### Testergebnisse

Die nach den Beispielen 1 bis 3 hergestellten Dispersionsfarben wurde unter Luftatmosphäre mit einem Pinsel auf eine glatte weiße Oberfläche aufgetragen. Nach einigen Minuten wandelte sich der Farbton der aufgetragenen Farben von rosa nach reinweiß.

Die hergestellten Dispersionsfarbe wiesen ferner folgende Ergebnisse nach DIN EN 13300 auf:

| | |
|---|---|
| Kontrastverhältnis: | Klasse 2 bei 7 m²/l |
| Nassabrieb; | Klasse 3 (33,79 µm) |
| Max. Korngröße : | fein |
| Glanz: | stumpfmatt |
| Überarbeitbarkeit: | i.o. |

Die Ergebnisse zeigen, dass die nach den Beispielen 1 bis 3 hergestellten erfindungsgemäßen Dispersionsfarben insbesondere hinsichtlich Nassabrieb und Kontrastverhältnis ausgezeichnete Eigenschaften nach DIN EN 13300 aufweisen und der Zusatz von Phenolphthalein als Säure-Base-Indikator keinerlei negativen Einfluss auf die Farbeigenschaften hat.

## Patentansprüche

1. Beschichtungsmittel mit einem pH >8, insbesondere auf Dispersionsbasis enthaltend einen Säure-Base-Indikator, **dadurch gekennzeichnet, dass** es zur Einstellung des pH mindestens eine basische Substanz, ausgewählt aus der Gruppe, bestehend aus Kaliwasserglas, Natronwasserglas und Hydroxiden wie Natrium-, Kalium- und Ammoniumhydroxid enthält.

2. Beschichtungsmittel nach Anspruch 1, **dadurch gekennzeichnet, dass** der Umschlagsbereich des Säure-Base-Indikators zwischen pH 6 und pH 14, insbesondere zwischen pH 8 und pH 10 liegt.

3. Beschichtungsmittel nach Anspruch 1 oder 2, **dadurch gekennzeichnet, dass** der Farbumschlag des Säure-Base-Indikators von farbig bei höherem pH nach farblos bei niedrigerem pH erfolgt.

4. Beschichtungsmittel nach einem der vorangegangenen Ansprüche, **dadurch gekennzeichnet, dass** der Säure-Base-Indikator ausgewählt ist aus der Gruppe bestehend aus Phenolphthalein, Nitramin, o-Kresolphthalein, α-Naphtholbenzein und Thymolphthalein.

5. Beschichtungsmittel nach einem der vorangegangenen Ansprüche, **dadurch gekennzeichnet, dass** der Säure-Base-Indikator in einer Menge von 0,001 bis 1 Gew.%, insbesondere 0,01 bis 0,1 Gew.%, bezogen auf die Gesamtmenge des Beschichtungsmittels, enthalten ist.

6. Beschichtungsmittel nach einem der vorangegangenen Ansprüche, **dadurch gekennzeichnet, dass** das Beschichtungsmittel einen pH > 11 aufweist.

7. Beschichtungsmittel nach einem der vorangegangenen Ansprüche, **dadurch gekennzeichnet, dass** es die basische Substanz, insbesondere Kaliwasserglas, in einer Menge von 1 bis 10 Gew.%, insbesondere 2 bis 4 Gew.%, bezogen auf die Gesamtmenge des Beschichtungsmittels, enthält.

8. Beschichtungsmittel nach einem der vorangegangenen Ansprüche, **dadurch gekennzeichnet, dass** der pH des Beschichtungsmittels gepuffert ist.

9. Beschichtungsmittel nach einem der vorangegangenen Ansprüche, **dadurch gekennzeichnet, dass** es ein Pigment, insbesondere ein Weißpigment wie TiO₂, enthält.

10. Beschichtungsmittel nach Anspruch 9, **dadurch gekennzeichnet, dass** das Pigment in einer Menge von 2 bis 15 Gew.%, insbesondere von 5 bis 10 Gew.%, bezogen auf die Gesamtmenge des Beschichtungsmittels, enthalten ist.

11. Beschichtungsmittel nach einem der vorangegangenen Ansprüche, **dadurch gekennzeichnet, dass** es ein Bindemittel enthält.

12. Beschichtungsmittel nach Anspruch 11, **dadurch gekennzeichnet, dass** das Bindemittel eine Kunstharz-Dispersion, insbesondere eine Kunstharz-Dispersion auf Basis von Styrol-Acrylat, ist.

13. Beschichtungsmittel nach Anspruch 11 oder 12, **dadurch gekennzeichnet, dass** das Bindemittel in einer Menge von 5 bis 40 Gew.%, insbesondere 15 bis 18 Gew.%, bezogen auf die Gesamtmenge des Beschichtungsmittels, enthalten ist.

14. Beschichtungsmittel nach einem der vorangegangenen Ansprüche, **dadurch gekennzeichnet, dass** es Füllstoffe wie Carbonate, Silikate, Sulfate und Oxide enthält.

15. Beschichtungsmittel nach Anspruch 14, **dadurch gekennzeichnet, dass** die Füllstoffe in einer Menge von 30 bis 70 Gew.%, insbesondere 40 bis 45 Gew.%, bezogen auf die Gesamtmenge des Beschichtungsmittels, enthalten sind.

16. Beschichtungsmittel nach einem der vorangegangenen Ansprüche, **dadurch gekennzeichnet, dass** es Additive wie Verdicker, Entschäumer, Netzmittel, Dispergiermittel, Stabilisatoren und/oder Biozide enthält.

17. Beschichtungsmittel nach Anspruch 16, **dadurch gekennzeichnet, dass** die Additive in einer Menge von insgesamt 0,1 bis 5 Gew.%, insbesondere 0,5 bis 2 Gew.%, bezogen auf die Gesamtmenge des Beschichtungsmittels, enthalten sind.

18. Beschichtungsmittel nach einem der vorangegangenen Ansprüche, **dadurch gekennzeichnet, dass** es eine wässrige Dispersionsfarbe, insbesondere eine weiße wässrige Dispersionsfarbe, ist.

19. Beschichtungsmittel nach einem der vorangegangenen Ansprüche, **dadurch gekennzeichnet, dass** es einen Feststoffanteil von 40 bis 80 Gew.%, insbesondere 55 bis 65 Gew.%, bezogen auf die Gesamtmenge des Beschichtungsmittels, aufweist.

## Claims

1. Coating agent with a pH > 8, in particular on a dispersion basis, comprising an acid-base indicator, **characterised in that** to set the pH it contains at least one basic substance selected from the group consisting of potassium silicate, sodium silicate and hydroxides such as sodium hydroxide, potassium hydroxide and ammonium hydroxide.

2. Coating agent according to Claim 1, **characterised in that** the transition range of the acid-base indicator lies between pH 6 and pH 14, in particular between pH 8 and pH 10.

3. Coating agent according to Claim 1 or 2, **characterised in that** the colour transition of the acid-base indicator takes place from coloured at higher pH to colourless at lower pH.

4. Coating agent according to any one of the preceding claims, **characterised in that** the acid-base indicator is selected from the group consisting of phenolphthalein, nitramine, o-cresolphthalein, α-naphtholbenzein and thymolphthalein.

5. Coating agent according to any one of the preceding claims, **characterised in that** the acid-base indicator is contained in a quantity of 0.001 to 1 wt.%, in particular 0.01 to 0.1 wt.%, in relation to the total quantity of the coating agent.

6. Coating agent according to any one of the preceding claims, **characterised in that** the coating agent has a pH > 11.

7. Coating agent according to any one of the preceding claims, **characterised in that** it contains the basic substance, in particular potassium silicate, in a quantity of 1 to 10 wt.%, in particular 2 to 4 wt.%, in relation to the total quantity of the coating agent.

8. Coating agent according to any one of the preceding claims, **characterised in that** the pH of the coating agent is buffered.

9. Coating agent according to any one of the preceding claims, **characterised in that** it contains a pigment, in particular a white pigment such as TiO₂.

10. Coating agent according to Claim 9, **characterised in that** the pigment is contained in a quantity of 2 to 15 wt.%, in particular 5 to 10 wt.%, in relation to the total quantity of the coating agent.

11. Coating agent according to any one of the preceding claims, **characterised in that that** it contains a binder.

12. Coating agent according to Claim 11, **characterised in that** the binder is a synthetic resin dispersion, in particular a synthetic resin dispersion based on styrene acrylate.

13. Coating agent according to Claim 11 or 12, **characterised in that** the binder is contained in a quantity of 5 to 40 wt.%, in particular 15 to 18 wt.%, in relation to the total quantity of the coating agent.

14. Coating agent according to any one of the preceding claims, **characterised in that** it contains fillers such as carbonates, silicates, sulphates and oxides.

15. Coating agent according to Claim 14, **characterised in that** the fillers are contained in a quantity of 30 to 70 wt.%, in particular 40 to 45 wt.%, in relation to the total quantity of the coating agent.

16. Coating agent according to any one of the preceding claims, **characterised in that** it contains additives such as thickeners, defoamers, wetting agents, dispersants, stabilisers and/or biocides.

17. Coating agent according to Claim 16, **characterised in that** the additives are contained in a total quantity of 0.1 to 5 wt.%, in particular 0.5 to 2 wt.%, in relation to the total quantity of the coating agent.

18. Coating agent according to any one of the preceding claims, **characterised in that** it is an aqueous dispersion paint, in particular a white aqueous dispersion paint.

19. Coating agent according to any one of the preceding claims, **characterised in that** it has a solids proportion of 40 to 80 wt.%, in particular 55 to 65 wt.%, in relation to the total quantity of the coating agent.

## Revendications

1. Agent de revêtement avec un pH > 8, en particulier à base d'une dispersion, contenant un indicateur acide-base, **caractérisé en ce qu'**il contient pour l'ajustement du pH, au moins une substance basique, choisie parmi le groupe consistant en l'orthosilicate de potassium, l'orthosilicate de sodium et des hydroxydes comme les hydroxydes de sodium, de potassium et d'ammonium.

2. Agent de revêtement selon la revendication 1, **caractérisé en ce que** la zone de virage de l'indicateur acide-base se situe dans l'intervalle allant de pH 6 à pH 14, en particulier de pH 8 à pH 10.

3. Agent de revêtement selon la revendication 1 ou 2, **caractérisé en ce que** le virage de couleur de l'indicateur acide-base se produit de coloré à pH élevé vers incolore à pH plus faible.

4. Agent de revêtement selon l'une des revendications précédentes, **caractérisé en ce que** l'indicateur acide-base est choisi parmi le groupe consistant en la phénolphtaléine, la nitramine, l'o-crésolphtaléine, l'α-naphtobenzéine et la thymolphtaléine.

5. Agent de revêtement selon l'une des revendications précédentes, **caractérisé en ce que** l'indicateur acide-base est présent en une quantité allant de 0,001 à 1% en poids, en particulier de 0,01 à 0,1% en poids, sur base de la quantité totale de l'agent de revêtement.

6. Agent de revêtement selon l'une des revendications précédentes, **caractérisé en ce que** l'agent de revêtement présente un pH > 11.

7. Agent de revêtement selon l'une des revendications précédentes, **caractérisé en ce qu'**il contient la substance basique, en particulier l'orthosilicate de potassium, en une quantité située dans l'intervalle allant de 1 à 10% en poids, en particulier de 2 à 4% en poids, sur base de la quantité totale d'agent de revêtement.

8. Agent de revêtement selon l'une des revendications précédentes, **caractérisé en ce que** le pH de l'agent de revêtement est tamponné.

9. Agent de revêtement selon l'une des revendications précédentes, **caractérisé en ce qu'**il contient un pigment, en particulier un pigment blanc comme le TiO₂.

10. Agent de revêtement selon la revendication 9, **caractérisé en ce que** le pigment est présent en une quantité située dans l'intervalle allant de 2 à 15% en poids, en particulier de 5 à 10% en poids, sur base de la quantité totale d'agent de revêtement.

11. Agent de revêtement selon l'une des revendications précédentes, **caractérisé en ce qu'**il contient un liant.

12. Agent de revêtement selon la revendication 11, **caractérisé en ce que** le liant est une dispersion de résine plastique, en particulier une dispersion de résine plastique à base de styrène-acrylate.

13. Agent de revêtement selon la revendication 11 ou 12, **caractérisé en ce que** le liant est présent en une quantité située dans l'intervalle allant de 5 à 40% en poids, en particulier de 15 à 18% en poids, sur base de la quantité totale d'agent de revêtement.

14. Agent de revêtement selon l'une des revendications précédentes, **caractérisé en ce qu'**il contient des charges, comme un carbonate, un silicate, un sulfate et un oxyde.

15. Agent de revêtement selon la revendication 14, **caractérisé en ce que** les charges sont présentes en une quantité située dans l'intervalle allant de 30 à 70% en poids, en particulier de 40 à 45% en poids, sur base de la quantité totale d'agent de revêtement.

16. Agent de revêtement selon l'une des revendications précédentes, **caractérisé en ce qu'**il contient des additifs, comme des épaississants, des anti-mousse, des réticulants, des agents de dispersion, des stabilisants et/ou des biocides.

17. Agent de revêtement selon la revendication 16, **caractérisé en ce que** les additifs sont présents en une quantité située dans l'intervalle allant de, au total, 0,1 à 5% en poids, en particulier de 0,5 à 2% en poids, sur base de la quantité totale d'agent de revêtement.

18. Agent de revêtement selon l'une des revendications précédentes, **caractérisé en ce qu'**il est une peinture au latex aqueuse, en particulier une peinture au latex aqueuse, blanche.

19. Agent de revêtement selon l'une des revendications précédentes, **caractérisé en ce qu'**il présente une teneur en matière solide allant de 40 à 80% en poids, en particulier de 55 à 65% en poids, sur base de la quantité totale d'agent de revêtement.
